Europäisches Patentamt

European Patent Office

Office européen des brevets

(19)

(11) Publication number: **0 060 145**
**A1**

(12)

# EUROPEAN PATENT APPLICATION

(21) Application number: **82301220.8**

(22) Date of filing: **10.03.82**

(51) Int. Cl.³: **C 08 J 3/16**
**C 08 J 3/00, C 08 L 7/00**
**C 08 L 9/00**
**//A23G3/30**

(30) Priority: **10.03.81 US 128429**

(43) Date of publication of application:
**15.09.82 Bulletin 82/37**

(84) Designated Contracting States:
**AT BE CH DE FR GB IT LI LU NL SE**

(71) Applicant: **del Angel, Abraham Garcia**
**Coahuila 212-13 Sur Co. Unidad Nacional**
**Cd. Madero Tamaulipas(MX)**

(72) Inventor: **del Angel, Abraham Garcia**
**Coahuila 212-13 Sur Co. Unidad Nacional**
**Cd. Madero Tamaulipas(MX)**

(74) Representative: **Ford, Michael Frederick et al,**
**MEWBURN ELLIS & CO. 2/3 Cursitor Street**
**London EC4A 1BQ(GB)**

(54) Process for making elastomer-resin.

(57) Resin ester gum is ground in a roll mill (10) and fed via elevator (11) to a hopper (12). Measured quantities of ground resin together with latex from tank (13) are mixed in a reactor (14) under continuous agitation and at a temperature between 3° and 35°C until the mixture forms an emulsion. The emulsion is coagulated by the addition of sodium chloride solution from tank (19) to a concentration between 1% and 10%. Coagulation is completed by the addition of sulphuric acid from tank (17). Crumbs of elastomer resin are produced which are washed in a tank (22) to remove impurities and excess salt. The crumbs are then dried in drier (27). The resulting product is a intermediate product in the manufacture of base gum for chewing gum. To do this, the crumbs are milled with plasticiser and lubricant. In this way the time and energy required to produce the base gum is reduced.

EP 0 060 145 A1

## PROCESS FOR MAKING ELASTOMER-RESIN.

The present invention relates to a process of making a new product usable in the chewing gum industry and to that product itself. The product (herein after referred to as Resin-Elastomer Masterbatch or REMB) may be used to produce base gum employed by the chewing gum industry in the manufacture of chewing gum.

In the manufacturing of chewing gum by the chewing gum industry, the main component is the base gum. The base gum provides certain properties and characteristics for the chewing gum such as consistency, elasticity and plasticity, and is a complex product of which the main components are an elastomer, either natural or synthetic, and a resin.

At the present time, the chewing gum industry make its base gum from an elastomer in latex form and from an esterified resin of the ester gum type, usually in flake form. The first step is the coagulation of the latex to obtain a solid elastomer. The process of coagulation is insufficiently understood in the chewing gum industry, hence some problems occur at the coagulation step which affect the industry's manufacturing operations. After coagulation, the second step is the incorporation of the resin into the elastomer by means of roll mills and addition of plasticizers. This process is efficient but is a time consuming and expensive process, which takes from 8 to 12 hours and consumes a great deal of electrical power at the mills when incorporating the resin into the elastomer, since the material is hard and sticky. Furthermore, it is necessary to maintain a close temperature control at the mill, to avoid degradation of the elastomer during its mastication.

Thus the standard method of making base gum has the following disadvantages:

1. Purchase of elastomer in latex form involves higher transportation costs due to the high proportion of water (60% or more) in the latex.

2. The process of coagulation is insufficiently understood by the chewing gum industry and causes problems to this industry when obtaining the solid elastomer.

3. Well trained and experienced operators are required to perform latex coagulation operations.

4. The present process is a time consuming one, that involves high power comsumptions during the prolongued milling and mastication operations performed at the roll mills, which are equipped with high power electrical motors.

The present invention seeks to overcome these disadvantages. In this invention the ester gum resin is mixed with the latex before coagulation.

Thus, according to the present invention, there is provided a process for making an elastomer-resin, comprising:

mixing finely divided ester resin of the ester gum type with latex to form an emulsion;

Coagulating the emulsion by adding a solution of sodium chloride to the emulsion until the sodium chloride concentration in the emulsion is between 1% and 10%, and then adding sulphuric acid; and

recovering the coagulated solid elastomer-resin.

The sodium chloride solution used for coagulation should be a concentrated solution, preferably a saturated solution.

Preferably the mixing of the resin ester gum and latex is carried out at a low temperature e.g. between $3^{\circ}C$ and $35^{\circ}C$ and with continuous agitation of the mixture. This assists rapid emulsification.

The finely divided resin ester gum is obtained by grinding the resin ester gum at a temperature below $36^{\circ}C$. The finely divided resin is then added to latex, in a predetermined proportion, the relative quantities depending on the type of base gum required to make chewing gum.

As result of coagulation of the emulsion, a solid product in the form of crumbs of pre-specified consistency is obtained, together with a liquid usually called "serum", which is discarded.

Thus the product of the process according to the present invention is crumbs of elastomer resin. Normally these will be washed in order to remove impurities and to obtain the desired purity for the REMB. The wash water is then eliminated and the crumbs are dried to a suitable moisture content (e.g. 3% to 10%) and may be bagged as a final product for sale.

The following advantages may be obtained by using the process of the present invention as compared with the process used at present time by the chewing gum industry:

1. An intermediate product may be provided, from which chewing gum can be made readily.

-4-

2. That intermediate product greatly simplifies the manufacture of chewing gum.

3. The resin ester gum is easily incorporated into an elastomer by means of an emulsifying process operation

4. In particular, intermediate product simplifies the process of chewing gum manufacturing by eliminating the elastomer coagulating operation and the subsequent elastomer resin ester gum incorporation operation.

5. Also the intermediate product greatly simplifies the process of chewing gum manufacturing by eliminating the substantial comsumption of energy in the incorporation of elastomer with resin ester gum.

6. The intermediate product greatly reduces the standard 8 to 10 hours process time for base gum manufacture to about 2 hours total process time.

The present invention may thus provide a rapid, simple and economical process for the manufacture of REMB. The crumbs of REMB may then be used in the manufacture of a base gum for chewing gum

To produce a base gum from REMB, a roll mill is loaded with the adequate type and quantity of REMB, then one or more plasticizers and/or lubricants are added in a suitable sequence and after about one to two hours of milling, the desired base gum is obtained.

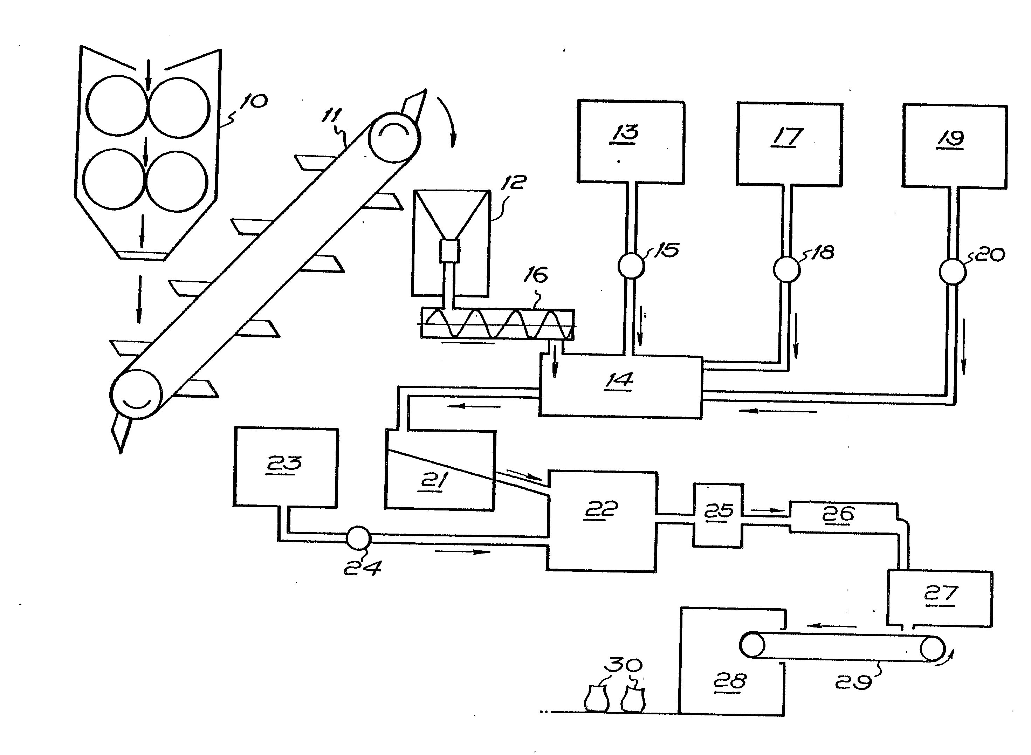

Examples of the present invention will now be described in detail, with reference to the accompanying drawing in which the sole figure shows a flow diagram illustrating the steps of a process according to the present invention. The first step of the process consists in feeding a resin ester gum to roll mill 10, which is provided with a nitrogen cooling system to maintain the temperature of the mill rolls below

$36^{o}$ to avoid reaching the softening point of the resin.

The resin is ground until the size of the particles attained is between 10 to 100 Mesh. The ground resin is then taken to a weighing hopper bin 12 by means of a bucket elevator 11.

While the grinding of the resin ester gum is being carried-out, latex from a tank 13 is transferred, by means of a pump 15, to a reactor 14 which is provided with an agitator. Once the reactor 14 has been loaded with the required amount of latex, a vigorous agitation is commenced with an agitator speed between 300 and 750 RPM. Immediately after this, a predetermined amount of the ground resin ester gum is fed slowly into the reactor by means of Screw Conveyor 16. The amount of latex and the amount of resin ester gum used are chosen according to the desired proportion of ratio of resin to latex in the resultant REMB. The vigorous agitation is used in order to attain rapidly a complete emulsification of the contents of the reactor 14. Once a predetermined amount of resin ester gum has been added and a complete emulsion obtained, the speed of the agitator's is reduced to between 20 and 90 RPM to bring about a slow agitation of the emulsion. During the emulsification process, the contents of the reactor should be maintained at a temperature between $3^{o}C$ and $35^{o}C$ and at atmospheric pressure. Afterwards, the reactor's batch is coagulated by means of a saturated solution of sodium chloride, which is added until a sodium chloride concentration between 1 and 10% is reached in the batch.

The saturated solution of sodium chloride is fed from the tank 19 to the reactor 14 by means of a pump 20. Once the desired concentration of sodium chloride has been reached sulphuric acid is added to the batch so as to complete the coagulation of the batch. The sulphuric acid is fed from a tank 17 to reactor 14 by means of a pump 18.

When the batch coagulates, crumbs of integrated elastomer-resin ester gum are formed and are maintained dispersed in a liquid phase called "serum". The contents of the reactor is then transferred to a screen filter 21 to separate the crumbs of elastomer-resin from the serum, the latter being discarded. Crumbs from filtering screen 21 are delivered to washing tank 22, in which they are agitated in order to wash-out impurities and excess salt. The washing operation is carried out with hot water with a temperature between $40^{o}C$ and $80^{o}C$, which is sent from a tank 23 by means of a pump 24. The washed crumbs are then passed to a filter 25 to eliminate excess water. The crumbs are then sent to a rotary filter 26 and to a pan dryer 27, from which crumbs with a moisture content between 3% and 10% are obtained. From dryer 27, the crumbs are transferred by a belt conveyor 29 to a bagging machine 28, where they are weighed and packed in bags 30.

The crumbs so produced by this process contitute the final product which is called REMB. The REMB may then be used in the manufacture of chewing gum..

The following three examples were carried-out to develop the optimum process for producing REMB:

EXAMPLE 1.

This example is a laboratory experiment for obtaining a sample of REMB in the ratio of 1:2 (1 Part elastomer and 2 Parts resin ester gum).

14 kg. of resin ester gum were finely grinded to a 60 Mesh particle size, while maintaining a mill temperature of $22^{o}C \pm 4^{o}C$ to prevent resin softening. The ground resin was then placed into a dosifying bin which served as a temporary storage. Grinding time was about 30 minutes.

Then 7 kgs. of latex were introduced into a laboratory reactor provided with an agitator. Loading of the reactor and agitation of latex inside the reactor to keep it homogenized took about 20 minutes. Then the 14 kg. of finely grinded resin was slowly added to the latex while maintaining the latex under a vigorous agitation in order to effect emulsification of the reactor contents. Complete emulsification of the latex with the resin ester gum was achieved in about 30 minutes. Operating conditions in the reactor were: temperature:$20^{o}C$; pressure: atmospheric; agitation:variable; with agitator speed of 400 RPM during emulsification and of 50 RPM after the emulsion batch was obtained.

Then, while maintaining agitation, the emulsion batch was coagulated by adding a saturated solution of sodium chloride until a 4% sodium chloride concentration in the batch was reached. Then, sulphuric acid was added to complete coagulation of the emulsion batch. Addition of the coagulants and complete coagulation of the batch was achieved in about 15 minutes. The coagulated batch was the passed to a vibrating screen to separate the crumbs from the liquid serum, the latter being discarded.^ The time for this separation was about 40 minutes.

The separated crumbs were then passed to a washing tank in which they were washed with hot water at 50°C.

The washed crumbs were again passed across the vibrating screen in order to eliminate excess water. Then the crumbs were passed to a rotary filter to reduce further their water content and then the crumbs were placed in a pan dryer to dry them to a final moisture content of 5%. Drying time was about 30 minutes. The dried crumbs were then taken out of the dryer and cooled by exposing them to ambient conditions.

These clean and dried crumbs constituted the sample of REMB with a 1:2 ratio of elastomer to resin ester gum.

EXAMPLE 2

This example, is a laboratory experiment for obtaining a sample of REMB in ratio of 1:3 (1Part elastomer and 3 parts of resin ester gum).

21 kgs. of resin ester gum were ground finely in a mill until particles of 80 Mesh size were obtained. A temperature of 16°C ± 4°C was maintained in the pulverizing mill.

The grinding time was approximately 50 minutes. The grinded resin was then passed to a dosifying bin.

Then 7 kgs of latex were introduced into a laboratory reactor provided with an agitator. Loading of the reactor and agitation of the latex inside the reactor to keep it homogenized took about 20 minutes. Then, the 21 kgs. of finely ground resin were slowly added to the latex within the reactor while maintaining the latex under a vigorous agitation with an agitator speed of about 600 RPM and at a temperature of 15°C and atmospheric pressure. The ground resin and the latex produced an emulsion. Once the emulsion batch was completely formed, it was maintained under a 70 RPM agitation. The emulsion so obtained was then coagulated by adding a saturated solution of sodium chloride until a sodium chloride concentration of 9% was attained in the batch. Then coagulation was completed by adding sulphuric acid. The emulsification and coagulation times were about 35 to 20 minutes respectively.

The coagulated batch was then passed to a vibrating screen in order to separate the crumbs and the serum. The serum was discarded. The time for this operation was about 30 minutes. Then, the crumbs were passed to an open wash tank where they were washed with hot water at $60^{o}$C. After washing, the crumbs were again passed to the vibrating screen to eliminate excess water. Then, the crumbs were passed to a rotary filter to reduce their water content. Finally, the crumbs were placed in a pan dryer for about 40 minutes. The dried crumbs formed a sample of REMB with a moisture content of 8% and of an elastomer to resin ratio of 1:3.

EXAMPLE 3

This example is a laboratory experiment for obtaining a sample of REMB in a ratio of 1: 1.5 (1 Part elastomer and 1.5. Parts of resin ester gum).

15 kgs. of resin ester gum were finely ground in a mill until particles of 40 Mesh size were obtained. The temperature of the pulverizing mill was maintained at about $10^{o}$C $\pm$ $4^{o}$C during the 40 minutes of grinding time. After grinding, the resin was temporarily placed in a dosifying bin. Then, 10 kgs. of latex were placed in a laboratory reactor provided with agitator. Loading of the reactor and agitation of latex inside the reactor to keep it homogenized took about 25 minutes. Then, the 15 kgs. of finely ground resin were slowly added to the latex, while maintaining a vigorous agitation with the agitator at approximately 350 RPM in order to rapidly obtain an emulsion. Once the whole of the resin was added and a complete batch emulsion obtained, the emulsion was then maintained with a slower agitation of about 40 RPM. The time required for obtaining a complete emulsification of the batch was about 25 minutes, a temperature of $20^{o}C$ and atmospheric pressure being maintained in the reactor.

The emulsion batch was then coagulated within the reactor by a saturated solution of sodium chloride until a 3% concentration of sodium chloride was reached in the batch and immediately there after sulphuric acid was added to complete the coagulation of the batch. The time required for coagulation was about 50 minutes. The coagulated batch was then passed to a vibrating screen in order to separate the crumbs and serum.

The serum was discarded and the crumbs were placed in an open washing tank where the crumbs were washed with hot water at $70^{o}C$. After washing, the crumbs were passed across the vibrating screen in order to eliminate excess water. The washed crumbs were then passed to a rotary filter for further elimination of the water. Finally, the crumbs were placed in a pan dryer to dry the crumbs to a final moisture content of 6%. The dried crumbs obtained by the above process formed a sample of REMB with a 1: 1.5 elastomer to resin ester gum ratio.

CLAIMS

1. A process for making an elastomer-resin, comprising: mixing finely divided ester resin of the ester gum type with latex to form an emulsion; coagulating the emulsion by adding a solution of sodium chloride to the emulsion until the sodium chloride concentration in the emulsion is between 1% and 10%, and then adding sulphuric acid; and recovering the coagulated solid elastomer-resin.

2. A process according to claim 1, wherein the mixing of the ester resin with latex is carried out at a temperature between $3^{o}C$ and $35^{o}C$.

3. A process according to claim 1 or claim 2, wherein the mixing of the ester resin with latex is carried out with the mixture being continuously agitated until complete emulsification is attained.

4. A process according to any one of the preceding claims, wherein the finely divided ester resin is produced by grinding the ester resin at a temperature below $36^{o}C$.

5. A process according to any one of the preceding claims, wherein the coagulated solid elastomer-resin is recovered by:
   separating the solid elastomer-resin from the liquid;
   washing the solid elastomer-resin; and
   Drying the resultant elastomer-resin until a predetermined degree of moisture is obtained.

6. A process according to any one of the preceding claims, wherein the latex is a natural elastomer.

7. A process according to any one of claims 1 to 5, wherein the latex is a synthetic elastomer.

8. A process according to any one of the preceding claims wherein the ester resin is a mixture of esterified resinic acids of the ester gum type.

9. A process for producing a base gum comprising milling an elastomer-resin produced by a process according to any one of the proceding claims, together with at least one plasticiser and/or at least one lubricant.

10. A resin-elastomer mixture, the mixture being in the form of crumbs convertible to gum upon milling with addition of at least one plasticiser and/or at least one lubricant.

## EUROPEAN SEARCH REPORT

- EP 82301220.8

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>GB - A - 1 304 317</u> (MARATHON OIL)<br>* Page 1, line 54 - page 2, line 5 * | 1,3<br>5-7 | C 08 J 3/16<br>C 08 J 3/00<br>C 08 L 7/00<br>C 08 L 9/00//<br>A 23 G 3/30 |
| A | <u>US - A - 1 975 447</u> (CANNING)<br>* Claims * | 1,3 | |
| A | <u>DE - B - 1 288 246</u> (FRANK H. FLEER)<br>* Column 4, lines 4-38; column 5, lines 11-21; column 6, lines 46-54 * | 10 | **TECHNICAL FIELDS SEARCHED (Int.Cl. ³)**<br><br>C 08 J<br>A 23 G 3/00<br>C 08 L 7/00<br>C 08 L 9/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 26-05-1982 | WEIGERSTORFER |

EPO Form 1503.1  06.78